# FASCICULE DE BREVET EUROPEEN

(11) **EP 3 233 588 B1**
(45) Date de publication et mention de la délivrance du brevet: **18.03.2020**
(21) Numéro de dépôt: 15804356.2
(22) Date de dépôt: 26.11.2015
(51) Int. Cl.: B60R 25/021

(54) **DISPOSITIF D'ANTIVOL POUR UNE COLONNE DE DIRECTION D'UN VÉHICULE AUTOMOBILE**
DIEBSTAHLSCHUTZVORRICHTUNG FÜR DIE LENKSÄULE EINES KRAFTFAHRZEUGS
ANTI-THEFT DEVICE FOR A STEERING COLUMN OF A MOTOR VEHICLE

(30) Priorité: 18.12.2014 FR 1462842
(43) Date de publication de la demande: 25.10.2017
(73) Titulaire: U-Shin France, 94000 Créteil (FR)
(72) Inventeur: DEVERNOIS, Thomas, 94046 Créteil Cedex (FR)
(74) Mandataire: Verriest, Philippe
(86) Numéro de dépôt international: PCT/EP2015/077721
(87) Numéro de publication internationale: WO 2016/096359

(56) Documents cités:
- EP-A2- 0 957 015
- WO-A1-03/042014
- FR-A1- 2 783 221
- FR-A1- 2 937 599
- FR-A1- 2 964 350
- FR-A1- 2 988 057

## Description

La présente invention concerne un dispositif d'antivol pour une colonne de direction d'un véhicule automobile.

Les dispositifs d'antivol pour colonne de direction comprennent usuellement au moins une partie de commande et une partie de blocage de la colonne de direction.

La partie de commande comprend, au moins, un stator entourant un rotor mobile en rotation autour d'un axe de rotation. Le rotor est configuré pour entraîner une came dans des positions spécifiques.

La partie de blocage comporte un pêne mobile entre une position de blocage de la colonne de direction et une position de déblocage de ladite colonne.

Dans la position de blocage, le pêne vient se mettre dans une cavité de la colonne de direction, empêchant de ce fait tout mouvement de ladite colonne.

Dans la position de déblocage, le pêne vient se mettre à distance de la colonne de direction autorisant de ce fait la rotation de ladite colonne. L'utilisateur peut ainsi manœuvrer le véhicule automobile.

La came permet de transmettre la commande au pêne de passer dans une de ces deux positions.

De tels dispositifs doivent être fixés sur la colonne de direction afin que le pêne puisse se mettre en position de blocage de la colonne de direction.

Il est connu d'utiliser une bride qui avec le corps du dispositif entoure la colonne de direction. La fixation est ensuite réalisée à l'aide de vis fixant la bride sur le corps.

Il est également connu de fixer le corps du dispositif directement sur l'enveloppe de la colonne de direction par l'intermédiaire de vis.

Néanmoins, dans ces deux modes de réalisation, les vis sont vulnérables aux attaques par des personnes malintentionnées. Si les vis sont retirées, le pêne devient accessible et l'antivol est neutralisé.

FR 2 988 057 A1 divulgue un antivol pour colonne de direction de véhicule automobile.

Il existe un besoin de fournir un dispositif d'antivol moins vulnérable au vol.

Un but de la présente invention est donc de fournir un dispositif d'antivol de véhicule automobile plus robuste aux tentatives de vol, simple à mettre en œuvre et efficace.

A cet effet, selon un premier aspect, l'invention a pour objet un dispositif d'antivol de colonne de direction d'un véhicule automobile selon la revendication 1.

Le dispositif de l'invention permet de manière simple et efficace d'assurer que les moyens de fixation sont spécifiquement protégés. Les moyens de protection empêchent le retrait des moyens de fixation, donc de désolidariser le dispositif d'antivol de la colonne de direction, et ainsi d'avoir accès au pêne.

L'invention concerne également un véhicule automobile comportant une colonne de direction et un dispositif selon l'invention, dans lequel le dispositif est fixé sur la colonne de direction par le moyen de fixation protégé par le moyen de protection.

L'invention peut également comprendre l'une quelconque des caractéristiques suivantes prises seules ou selon toutes les combinaisons possibles :
- la partie annulaire est de forme sensiblement cylindrique ;
- le moyen de protection comporte un support configuré pour maintenir le moyen de protection en position ;
- le support est formé de manière monobloc avec la partie annulaire ;
- le support est un élément du moyen de fixation distinct de la partie annulaire ;
- le support est maintenu à l'aide du moyen de fixation ;
- le moyen de fixation comporte une partie fusible.

L'invention sera davantage comprise à la lumière de la description non limitative qui va suivre et faite en référence des dessins.

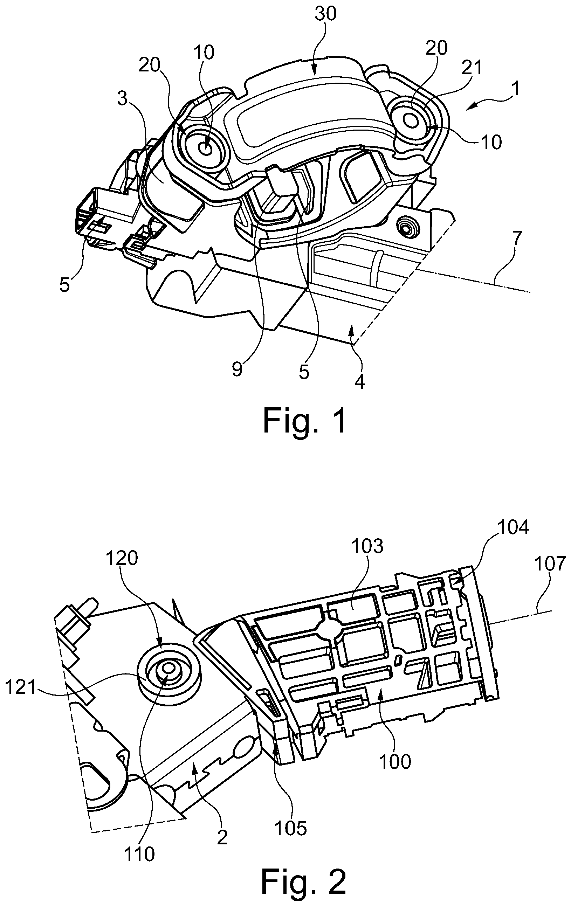

- la figure 1 est une vue en perspective de face d'un mode de réalisation du dispositif selon l'invention comportant une bride;
- la figure 2 est une vue en perspective de face d'un autre mode de réalisation du dispositif selon l'invention fixé directement sur l'enveloppe de la colonne de direction d'un véhicule automobile ;

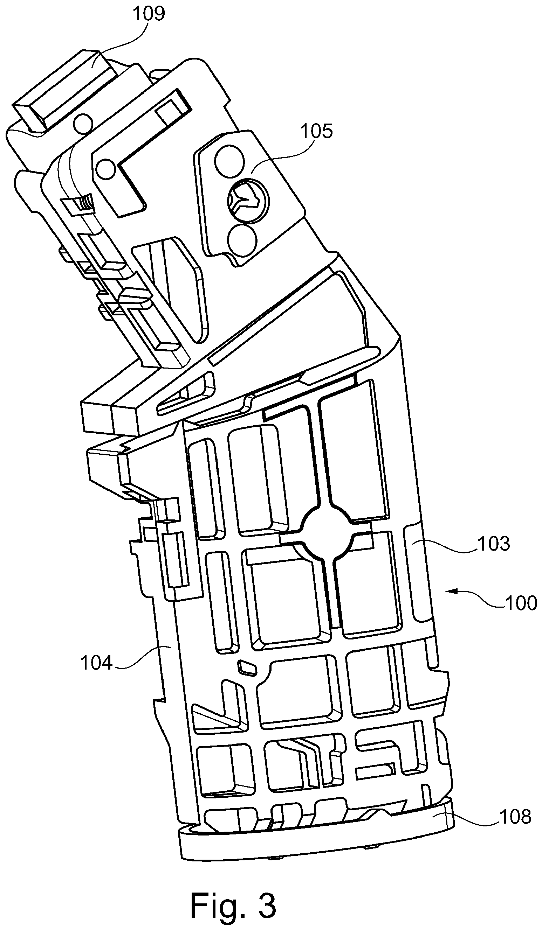

- la figure 3 est une vue en perspective de face du dispositif d'antivol isolé selon le mode de réalisation de la figure 2 ;
- la figure 4 est une vue en perspective de face du mode de réalisation de la figure 2 sans le moyen de protection ;
- la figure 5 est une vue en perspective de dessus d'une bride d'un dispositif antivol selon un autre mode de réalisation ;
- la figure 6 est une vue en perspective de dessus d'une bride d'un dispositif antivol selon un autre mode de réalisation

Comme visible sur les figures, le dispositif d'antivol 1, 100 de colonne de direction 2 d'un véhicule automobile comporte un corps 3, 103, 104 destiné à être fixé sur la colonne de direction 2. La colonne de direction peut comporter pour ce faire un enveloppe externe destinée à recevoir le dispositif de l'invention.

Le corps 3, 103, 104 contient la partie de commande et la partie de blocage 5, 105 de la colonne de direction 2.

La partie de commande comprend, au moins, un stator 8, 108 entourant un rotor (non représenté) mobile en rotation autour d'un axe de rotation 7, 107. Le rotor (non représenté) est configuré pour entraîner une came (non représentée) dans des positions spécifiques que prend le rotor.

La partie de blocage 5, 105 comporte un pêne 9, 109 mobile entre une position de blocage de la colonne de direction 2 et une position de déblocage de ladite colonne 2.

La came permet de transmettre la commande au pêne 9, 109 de passer dans une de ces deux positions.

Le dispositif de l'invention 1, 100 comprend en outre :
- un moyen de fixation 10, 110 configuré pour fixer ledit corps 3, 103, 104 sur la colonne de direction 2 ; et
- un moyen de protection 20, 120 entourant ledit moyen de fixation 10, 110 et apte à empêcher le retrait desdits moyens de fixation 10, 110 lorsque le corps 3, 103, 104 est monté sur la colonne de direction 2.

En particulier, le dispositif de l'invention 1, 100 comprend :
- plusieurs moyens de fixation 10, 110 configurés pour fixer ledit corps 3, 103, 104 sur la colonne de direction 2 ; et
- plusieurs moyens de protection 20, 120 chacun entourant chaque moyen de fixation 10, 110 et étant apte à empêcher le retrait desdits moyens de fixation 10 110 lorsque le corps 3, 103, 104 est monté sur la colonne de direction 2.

Le moyen de fixation 10, 110 peut comporter une partie fusible apte à rompre lorsqu'une torsion trop importante est appliquée au dispositif 1 de l'invention.

A titre d'exemple, le moyen de fixation peut être une vis dont la tête est fusible.

Le moyen de fixation peut être réalisé dans un matériau choisi dans la liste comprenant CQ22 et 17MnBs.

Le moyen de protection 20, 120 comporte une partie annulaire 21, 121 entourant le moyen de fixation 10, 110.

La partie annulaire 21, 121 peut être de forme sensiblement cylindrique.

La hauteur de la partie annulaire 21, 121 est supérieure à la hauteur de la partie émergente des moyens de fixation 10, 110 lorsque ces derniers fixent le corps 3, 103, 104 et la colonne de direction 2.

Le moyen de protection 20, 120 peut comporter un support (non visible) configuré pour maintenir le moyen de protection 20, 120 en position.

Le support du moyen de protection est de forme adaptée au maintien du moyen de protection. A titre d'exemple, il peut être de forme annulaire, bombée, ou ovale.

Le support du moyen de protection peut être formé de manière monobloc avec la partie annulaire 21, 121 ce qui permet de simplifier le montage.

Le support du moyen de protection peut être au contraire distinct de la partie annulaire 21, 121. De ce fait, le moyen de protection est réalisé avec au moins deux éléments rapportés. Le support du moyen de protection peut appartenir au moyen de fixation 10,110 distinct de la partie annulaire 21,121. En d'autres termes, il peut être un élément dudit moyen de fixation 10, 110. Dans ce cas, la partie annulaire 21,121peut être rapportée sur cet élément.

Selon un autre mode de réalisation, la partie annulaire 21,121 peut être réalisée de manière monobloc avec le moyen de fixation 10, 110. Le support du moyen de protection est alors une partie intégrante dudit moyen de fixation 10, 110 ce qui permet d'avoir un montage simplifié. Dans ce cas, le moyen de protection et le moyen de fixation ne forme qu'un seul et unique élément.

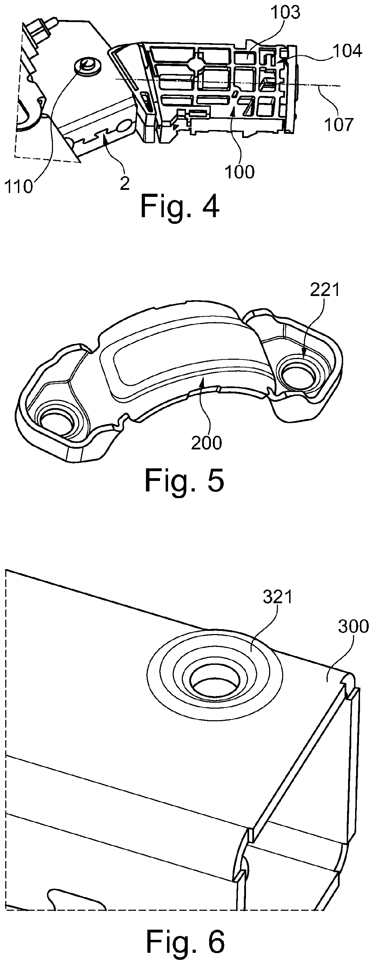

Selon un autre mode de réalisation représenté sur les figures 5 et 6, la partie annulaire 221 ; 321 peut être réalisée de manière monobloc avec la bride 200 ou l'enveloppe externe de la colonne de direction 300. Le support du moyen de protection est dans ce cas une partie intégrante dudit moyen de protection 20, 120 ce qui permet d'avoir un montage simplifié.

Le support du moyen de protection peut être maintenu à l'aide du moyen de fixation 10, 110. Dans ce cas, le support du moyen de protection peut être de forme annulaire interposé entre la tête émergente du moyen de fixation 10, 110 et la bride 30 ou l'enveloppe de la colonne de direction 2.

Le moyen de protection 20, 120 peut être réalisé dans un matériau choisi dans la liste comprenant XC18Pb, S300Pb et DC03. En particulier, le support du moyen de protection peut être réalisé dans un matériau choisi dans la liste comprenant DC03 et S420. La partie annulaire 21, 121 peut être réalisée dans un matériau choisi dans la liste comprenant XC18Pb et S300Pb.

Le moyen de protection 20, 120 peut être serti, soudé, ou embouti directement dans le support de la bride ou de la colonne de direction.

L'invention concerne également un véhicule automobile comportant une colonne de direction 2 et un dispositif 1, 100 selon l'invention, dans lequel le dispositif 1, 100 est fixé sur la colonne de direction 2 par le moyen de fixation 10, 110 protégé par le moyen de protection 20, 120.

## Revendications

1. Dispositif d'antivol (1 ; 100) pour une colonne de direction (2) d'un véhicule automobile comportant : - un corps (3 ; 103 ; 104) destiné à être fixé sur la colonne de direction (2) ;
- plusieurs moyens de fixation (10 ; 110) configurés pour fixer ledit corps (3 ; 103 ; 104) sur la colonne de direction (2) ;
- plusieurs moyens de protection (20 ; 120) chacun entourant chaque moyen de fixation (10 ; 110) et étant apte à empêcher le retrait desdits moyens de fixation (10 ; 110) lorsque le corps (3 ; 103 ; 104) est monté sur la colonne de direction (2),.chaque moyen de protection (20 ; 120) comportant une partie annulaire (21 ; 121) entourant chaque moyen de fixation (10 ; 110), la hauteur de la partie annulaire (21 ; 121) étant supérieure à la hauteur de la partie émergente des moyens de fixation (10 ; 110) lorsque ces derniers fixent le corps (3 ; 103 ; 104) et la colonne de direction (2).

2. Dispositif (1 ; 100) selon la revendication 1, dans lequel la partie annulaire (21 ; 121) est de forme sensiblement cylindrique.

3. Dispositif (1 ; 100) selon l'une quelconque des revendications 1 ou 2, dans lequel le moyen de protection (20 ; 120) comporte un support configuré pour maintenir le moyen de protection (20 ; 120) en position.

4. Dispositif (1 ; 100) selon la revendication précédente associé à l'une quelconque des revendications 1 ou 2, dans lequel le support est formé de manière monobloc avec la partie annulaire (21 ; 121).

5. Dispositif (1 ; 100) selon la revendication 3, dans lequel le support est un élément du moyen de fixation (10 ; 110) distinct de la partie annulaire (21 ; 121).

6. Dispositif (1 ; 100) selon l'une quelconque des revendications précédentes, dans lequel le support est maintenu à l'aide du moyen de fixation (10 ; 110).

7. Dispositif (1 ; 100) selon l'une quelconque des revendications précédentes, dans lequel le moyen de fixation (10 ; 110) comporte une partie fusible.

8. Véhicule automobile comportant une colonne de direction (2) et un dispositif (1 ; 100) selon l'une quelconque des revendications précédentes, dans lequel le dispositif (1 ; 100) est fixé sur la colonne de direction (2) par le moyen de fixation (10 ; 110) protégé par le moyen de protection (20 ; 120).

## Patentansprüche

1. Diebstahlsicherungsvorrichtung (1; 100) für eine Lenksäule (2) eines Kraftfahrzeugs, umfassend:
- einen Körper (3; 103; 104), der dazu bestimmt ist, an der Lenksäule (2) befestigt zu werden;
- mehrere Befestigungsmittel (10; 110), die so konfiguriert sind, dass sie den Körper (3; 103; 104) an der Lenksäule (2) befestigen;
- mehrere Schutzmittel (20; 120), die jedes jedes Befestigungsmittel (10; 110) umgeben und in der Lage sind, das Entfernen der Befestigungsmittel (10; 110) zu verhindern, wenn der Körper (3; 103; 104) an der Lenksäule (2) montiert ist, wobei jedes Schutzmittel (20; 120) einen ringförmigen Teil (21; 121) umfasst, der jedes Befestigungsmittel (10; 110) umgibt, wobei die Höhe des ringförmigen Teils (21; 121) größer ist als die Höhe des herausstehenden Teils der Befestigungsmittel (10; 110), wenn diese letzteren den Körper (3; 103; 104) und die Lenksäule (2) befestigen.

2. Vorrichtung (1; 100) nach Anspruch 1, wobei der ringförmige Teil (21; 121) von im Wesentlichen zylindrischer Form ist.

3. Vorrichtung (1; 100) nach einem der Ansprüche 1 oder 2, wobei das Schutzmittel (20; 120) eine Halterung umfasst, die so konfiguriert ist, dass sie das Schutzmittel (20; 120) in Position hält.

4. Vorrichtung (1; 100) nach dem vorstehenden Anspruch in Kombination mit einem der Ansprüche 1 oder 2, wobei die Halterung einstückig mit dem ringförmigen Teil (21; 121) gebildet ist.

5. Vorrichtung (1; 100) nach Anspruch 3, wobei die Halterung ein Element des Befestigungsmittels (10; 110) ist, das vom ringförmigen Teil (21; 121) getrennt ist.

6. Vorrichtung (1; 100) nach einem der vorstehenden Ansprüche, wobei die Halterung mit Hilfe des Befestigungsmittels (10; 110) gehalten wird.

7. Vorrichtung (1; 100) nach einem der vorstehenden Ansprüche, wobei das Befestigungsmittel (10; 110) einen schmelzbaren Teil umfasst.

8. Kraftfahrzeug, das eine Lenksäule (2) und eine Vorrichtung (1; 100) nach einem der vorstehenden Ansprüche umfasst, wobei die Vorrichtung (1; 100) durch das Befestigungsmittel (10; 110), das durch das Schutzmittel (20; 120) geschützt ist, an der Lenksäule (2) befestigt ist.

## Claims

1. An antitheft device (1; 100) for a steering column (2) of a motor vehicle including:
- a body (3; 103; 104) intended to be fastened on the steering column (2);
- several fastening means (10; 110) configured to fasten said body (3; 103; 104) on the steering column (2);
- several protective means (20; 120) each surrounding each fastening means (10; 110) and being adapted to prevent the removal of said fastening means (10; 110) when the body (3; 103; 104) is mounted on the steering column (2), each protective means (20; 120) including an annular portion (21; 121) surrounding each fastening means (10; 110), the height of the annular portion (21; 121) being larger than the height of the projecting portion of the fastening means (10; 110) when these fasten the body (3; 103; 104) and the steering column (2).

2. The device (1; 100) according to claim 1, wherein the annular portion (21; 121) has a substantially cylindrical shape.

3. The device (1; 100) according to any one of claims 1 or 2, wherein the protective means (20; 120) includes a support configured to hold the protective means (20; 120) in position.

4. The device (1; 100) according to the preceding claim in combination with any one of claims 1 or 2, wherein the support is integrally formed in one-piece with the annular portion (21; 121).

5. The device (1; 100) according to claim 3, wherein the support is an element of the fastening means (10; 110) distinct from the annular portion (21; 121).

6. The device (1; 100) according to any one of the preceding claims, wherein the support is held using the fastening means (10; 110).

7. The device (1; 100) according to any one of the preceding claims, wherein the fastening means (10; 110) includes a fusing portion.

8. A motor vehicle including a steering column (2) and a device (1; 100) according to any one of the preceding claims, wherein the device (1; 100) is fastened on the steering column (2) by the fastening means (10; 110) protected by the protective means (20; 120).
